# EUROPÄISCHE PATENTANMELDUNG

(11) **EP 4 756 938 A1**
(43) Veröffentlichungstag der Anmeldung: **10.06.2026**
(21) Anmeldenummer: 25220749.3
(22) Anmeldetag: 04.12.2025
(51) Int. Cl.: H01M 8/04089, H01M 8/04119, H01M 8/04223, F16K 31/00

(54) **BRENNSTOFFZELLENSYSTEM MIT AUTOMATISCHEM VENTIL**

(30) Priorität: 06.12.2024 DE 102024211692
(71) Anmelder: ContiTech Techno-Chemie GmbH, 61184 Karben (DE)
(72) Erfinder: LINZMAIER, Markus, 61184 Karben (DE); SIEGEL, Klaus-Alexander, 34346 Hann. Münden (DE); WAGNER, Florian, 34346 Hann. München (DE); DEHNERT, Olaf, 61184 Karben (DE)
(74) Vertreter: Bird & Bird LLP - Hamburg

(57) **Zusammenfassung**

Die Erfindung betrifft ein Brennstoffzellensystem (1) mit einer Brennstoffzelle (2) und einer von der Brennstoffzelle (2) abgehenden Leitung (4), z.B. einer Rezirkulationsleitung, einer Drain-Leitung oder einer Purge-Leitung. In der abgehenden Leitung (4) ist ein Ventil (5) mit einer durch ein Verschlusselement (50) verschließbaren Auslassöffnung (51) angeordnet. Es wird vorgeschlagen, dass das Ventil (5) einen temperaturabhängig bewegbaren Aktor (52) aufweist, der dazu ausgebildet ist, bei Vorliegen einer vorbestimmten Temperatur in der abgehenden Leitung (4) eine Öffnungskraft (K) auf das Verschlusselement (50) aufzubringen.

## Beschreibung

Die vorliegende Erfindung betrifft ein Brennstoffzellensystem mit den Merkmalen des Anspruchs 1 und ein Brennstoffzellenfahrzeug mit den Merkmalen des Anspruchs 12.

Eine Brennstoffzelle wandelt die chemische Reaktionsenergie eines kontinuierlich zugeführten Brennstoffes, z.B. Wasserstoff, und eines Oxidationsmittels, z.B. Sauerstoff, in elektrische Energie um. Brennstoffzellen werden beispielsweise in Brennstoffzellenfahrzeugen eingesetzt, um die erzeugte elektrische Energie direkt mittels eines Elektroantriebs in Bewegung umzuwandeln oder in einer Antriebsbatterie zeitweise zwischenzuspeichern. Brennstoffzellen können außer Wasserstoff auch andere Brennstoffe nutzen, insbesondere Methanol, Butan oder Erdgas.

Das bei der Stromerzeugungsreaktion in einer Wasserstoff-Sauerstoff-Brennstoffzelle entstehende Abgas, das insbesondere von der Kathode der Brennstoffzelle abgeführt wird, enthält Wasser (meist in Form von Wasserdampf und Wassertröpfchen) sowie mitunter nicht verbrauchten, überschüssigen Wasserstoff. Eine Möglichkeit, den Verbrauch des Brennstoffzellensystems zu reduzieren, besteht darin, das Anodenabgas, welches beim Austritt aus der Brennstoffzelle überschüssigen Wasserstoff enthält, zurückzuführen bzw. zu rezirkulieren. Hierzu kann das Anodenabgas einer Rezirkulationsvorrichtung zugeführt werden, in der der Wasserstoff von den übrigen Bestandteilen des Anodenabgases getrennt, aufbereitet und anschließend der Brennstoffzelle wieder zugeführt wird. In dem Anodenabgas enthaltenes Wasser kann von einem Wasserabscheider abgeschieden und ebenfalls wiederverwendet werden (z.B. zum Anfeuchten des angesaugten Sauerstoffs) oder insbesondere kontrolliert in die Umwelt abgelassen werden. Dennoch können sich je nach Geometrie und Einbaulage einer Rezirkulationsleitung Wasseransammlungen bilden, die sich negativ auf den Betrieb des Brennstoffzellensystems auswirken können. Wasseransammlungen können beispielsweise zu Anlaufproblemen beim Starten des Brennstoffzellensystems führen. Bei niedrigen Umgebungstemperaturen können die Leitungen überdies einfrieren und verstopfen.

Zum Entfernen von Wasseransammlungen aus der Rezirkulationsleitung wird beispielsweise in der DE 10 2020 212 500 A1 vorgeschlagen, das angesammelte Wasser durch Betrieb eines Gebläses einem Purge-Ventil zuzuführen, das zum Ablassen des Wassers geöffnet wird. Zur Integration dieser Lösung in ein Brennstoffzellensystem müssen eine Reihe von elektronisch regelbaren Komponenten verbaut und über Datenleitungen mit einer Steuereinheit verbunden werden, was aufwendig ist.

Darüber hinaus können Wasseransammlungen auch in anderen, von der Brennstoffzelle abgehenden Leitungen, wie einer Purge-Leitung oder einer Drain-Leitung, auftreten. Purge-Leitungen dienen dazu, um nach dem Abstellen der Brennstoffzelle das ausgespülte Gas an die Umgebung abzugeben. Drain-Leitungen dienen dazu, um abgeschiedenes Wasser vom Stack weg zu transportieren und anschließend der Umwelt oder einem Zwischentank zuzuführen. Auch diese Leitungen sollten nach dem Abstellen der Brennstoffzelle wasser- bzw. eisfrei gehalten werden.

Aufgabe der vorliegenden Erfindung ist es, ein Brennstoffzellensystem bereitzustellen, bei dem Wasseransammlungen in einer von der Brennstoffzelle abgehenden Leitung in einfacher Weise entfernt werden können. Insbesondere soll ein Öffnen des Ventils automatisch und ohne ein elektronisches Steuersignal ermöglicht werden.

Diese Aufgabe wird durch ein Brennstoffzellensystem mit den Merkmalen des Anspruchs 1 und ein Brennstoffzellenfahrzeug mit den Merkmalen des Anspruch 12 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen.

Das erfindungsgemäße Brennstoffzellensystem weist eine Brennstoffzelle mit einem Anodeneingang und einem Anodenausgang auf. An den Anodeneingang ist eine Versorgungsleitung zur Versorgung der Brennstoffzelle mit Wasserstoff als Anodengas angeschlossen. Das Brennstoffzellensystem weist eine von der Brennstoffzelle abgehende Leitung auf. Insbesondere ist dies eine Rezirkulationsleitung, eine Drain-Leitung oder eine Purge-Leitung. In der abgehenden Leitung ist ein Ventil mit einer durch ein Verschlusselement verschließbaren Auslassöffnung angeordnet. Über die Auslassöffnung können Wasseransammlungen, die nach Beendigung des Betriebs der Brennstoffzelle entstehen, in die Umgebung der Brennstoffzelle oder in einen se-paraten Behälter abgelassen werden. Das Ventil ist derart ausgebildet, dass das Verschlusselement zumindest anteilsweise durch einen in der abgehenden Leitung beim Betrieb des Brennstoffzellensystems vorliegenden Betriebsdruck in eine verschlossene Position gedrückt wird. Insbesondere ist das Ventil derart ausgebildet, dass es bei Vorliegen eines Betriebsdrucks stets verschlossen ist. Das Ventil weist einen temperaturabhängig bewegbaren Aktor auf, der dazu ausgebildet ist, bei Vorliegen einer vorbestimmten Temperatur in der abgehenden Leitung eine Öffnungskraft auf das Verschlusselement aufzubringen, um das Ventil zumindest teilweise zu Öffnen und so ein Ablassen des angesammelten Wassers zu ermöglichen. Die Öffnungskraft des Aktors ist dabei derart ausgelegt, dass der Aktor das Verschlusselement zumindest bei Nichtvorliegen des Betriebs-drucks in der abgehenden Leitung aus der verschlossenen Position in eine zumindest teilweise geöffnete Position drückt.

Der Erfindung liegt die Idee zugrunde, durch die konstruktive Ausgestaltung des Ventils einen automatischen, mechanischen Öffnungs- und Schließvorgang in Abhängigkeit der Temperatur und des Druckes in der abgehenden Leitung zu realisieren. Auf diese Weise kann ein Öffnungs- und Schließvorgang mit einfachen konstruktiven Mitteln und insbesondere unter Verzicht auf eine elektronische Steuerung des Ventils umgesetzt werden.

Die vorbestimmte Temperatur, bei der der Aktor die Öffnungskraft aufbringt, kann dabei eine "hohe" Temperatur sein, die im Wesentlichen der Betriebstemperatur entspricht, d.h. insbesondere nicht mehr als 5 K von der Betriebstemperatur abweicht, sein oder eine "niedrige" Temperatur sein, die deutlich unterhalb der Betriebstemperatur liegt, d.h. insbesondere mehr als 10 K, vorzugsweise mehr als 20 K unterhalb der Betriebstemperatur liegt.

In einer bevorzugten Ausführungsform des erfindungsgemäßen Brennstoffzellensystems ist der temperaturabhängig bewegbare Aktor dazu ausgebildet, die Öffnungskraft auf das Verschlusselement aufzubringen, wenn in der abgehenden Leitung eine Temperatur vorliegt, die im Wesentlichen der Betriebstemperatur entspricht, insbesondere wobei die Öffnungskraft eine Druckkraft ist.

In einer weiteren bevorzugten Ausführungsform des erfindungsgemäßen Brennstoffzellensystems ist der temperaturabhängig bewegbare Aktor dazu ausgebildet ist, die Öffnungskraft auf das Verschlusselement aufzubringen, wenn in der abgehenden Leitung eine Temperatur vorliegt, die deutlich unter der Betriebstemperatur liegt, insbesondere wobei die Öffnungskraft eine Zugkraft ist.

Insbesondere ist der Aktor ausgebildet, dass eine Ausdehnung des Aktors in seiner Wirkrichtung mit steigender Temperatur bzw. steigender Menge an aufgenommener Wärme steigt. Der Aktor ist bevorzugt um eine Wendelachse wendelförmig ausgebildet. Insbesondere erstreckt sich die Wirkrichtung des Aktors parallel zur Wendelachse. Vorzugsweise weist der Aktor die Form einer Schraubenfeder auf.

In einer beispielhaften Ausführungsform ist das Ventil beim Betrieb der Brennstoffzelle geschlossen. Beim Betrieb der Brennstoffzelle liegt in der abgehenden Leitung ein bestimmter Betriebsdruck sowie eine bestimmte Betriebstemperatur vor. Das Vorliegen des Betriebsdrucks bewirkt eine Betriebsdruckkraft auf das Verschlusselement, die das Verschlusselement beispielsweise in einen Ventilsitz und somit in die verschlossene Position des Ventils drückt. Das Vorliegen der Betriebstemperatur bewirkt, dass der temperaturabhängige Aktor Wärme aus der abgehenden Leitung aufnehmen und sich in einer vorgegebenen Wirkrichtung des Aktors ausdehnen kann. Der temperaturabhängige Aktor bringt eine Öffnungskraft in Form einer Druckkraft auf das Verschlusselement auf, die der Betriebsdruckkraft entgegengesetzt ist. Betriebsdruckkraft und Öffnungskraft sind derart aufeinander abgestimmt, dass im Normalbetrieb die Betriebsdruckkraft die Öffnungskraft überwiegt und das Ventil geschlossen bleibt. Unmittelbar nach dem Beenden des Betriebs der Brennstoffzelle liegt in der abgehenden Leitung nicht mehr der Betriebsdruck vor. Die Betriebstemperatur bleibt allerdings noch über eine gewisse Zeitdauer erhalten. Mangels ausreichendem Betriebsdruck wird nun keine oder eine geringere Betriebsdruckkraft auf das Verschlusselement ausgeübt, um dieses zu schließen. Hingegen bleibt die von dem Aktor aufgebrachte Öffnungskraft über eine gewisse Zeitdauer erhalten, so dass das Verschlusselement aus der verschlossenen Position in eine zumindest teilweise geöffnete Position gedrückt wird. In der abgehenden Leitung vorhandene Wasseransammlungen können abfließen. Eine gewisse Zeitdauer nach dem Beenden des Betriebs der Brennstoffzelle kühlt die abgehende Leitung ab. In einigen Ausführungsformen kann der Aktor ausgebildet sein, sich bei sinkender Temperatur wieder zusammenzuziehen. In diesem Fall wird die Öffnungskraft kleiner, so dass der Verschlusskörper wieder in seine verschlossene Position zurückgeführt werden kann, beispielsweise durch seine eigene Gewichtskraft oder ein entsprechend ausgelegtes Rückstellelement, dass eine der Öffnungskraft entgegengesetzte Rückstellkraft auf das Verschlusselement aufbringt.

In einer anderen beispielhaften Ausführungsform ist das Ventil beim Betrieb der Brennstoffzelle geschlossen. Beim Betrieb der Brennstoffzelle liegt in der abgehenden Leitung ein bestimmter Betriebsdruck sowie eine bestimmte Betriebstemperatur vor. Das Vorliegen des Betriebsdrucks bewirkt eine Betriebsdruckkraft auf das Verschlusselement, die das Verschlusselement beispielsweise in einen Ventilsitz und somit in die verschlossene Position des Ventils drückt. Das Vorliegen der Betriebstemperatur bewirkt, dass der temperaturabhängige Aktor Wärme aus der abgehenden Leitung aufnehmen und sich in einer vorgegebenen Wirkrichtung des Aktors ausdehnen kann. In seinem ausgedehnten Zustand bringt der Aktor keine Öffnungskraft auf das Verschlusselement auf. Der Aktor ist einerseits an dem Verschlusselement und andererseits z.B. an einem Teil des Ventilgehäuses befestigt. Unmittelbar nach dem Beenden des Betriebs der Brennstoffzelle liegt in der abgehenden Leitung nicht mehr der Betriebsdruck vor. Die Betriebstemperatur bleibt allerdings noch über eine gewisse Zeitdauer erhalten. Mangels ausreichendem Betriebsdruck wird nun keine oder eine geringere Betriebsdruckkraft auf das Verschlusselement ausgeübt, um dieses zu schließen. Aber auch der Aktor verbleibt noch eine gewisse Zeit in seiner ausgedehnten Position und bringt keine Öffnungskraft auf das Verschlusselement auf. Eine gewisse Zeitdauer nach dem Beenden des Betriebs der Brennstoffzelle kühlt die abgehende Leitung ab. Der Aktor ist ausgebildet, sich bei sinkender Temperatur wieder zusammenzuziehen. Ist eine Temperatur erreicht, die deutlich (z.B. 20 K) unter der Betriebstemperatur liegt, bringt der Aktor eine Öffnungskraft in Form einer Zugkraft auf das Verschlusselement auf, so dass das Ventil zumindest teilweise geöffnet wird, wodurch in der abgehenden Leitung vorhandene Wasseransammlungen abfließen können.

In anderen Worten ist das Ventil insbesondere derart ausgebildet, dass der Aktor die während des Betriebs des Brennstoffzellensystem entstehende Wärme aus der abgehenden Leitung entnimmt, um sich zu verformen und dadurch das Verschlusselement unter einer bestimmten Bedingung (z.B. Nichtvorliegen eines Betriebsdrucks nach Abschalten des Betriebs in der Rezirkulationsleitung oder Abkühlen des Systems nach längerer Standzeit) zu bewegen bzw. den Öffnungszustand des Ventils zu beeinflussen.

In einer bevorzugten Ausgestaltung des erfindungsgemäßen Brennstoffzellensystems enthält der Aktor ein Bimetall. Ein Bimetall ist beispielsweise ein Metallstreifen, der aus zwei übereinander liegenden Schichten unterschiedlicher Metalle besteht. Die beiden Schichten sind miteinander stoffschlüssig oder durch formschlüssiges Material verbunden. Aufgrund der unterschiedlichen Wärmeausdehnungskoeffizienten der verwendeten Metalle dehnt sich eine der Schichten stärker aus als die andere, wodurch sich der Streifen verformt, z.B. biegt. Durch geeignete Anordnung des Streifens, z.B. nach Art einer Schraubenfeder, kann die temperaturabhängige Verformung in eine Ausdehnung entlang einer Wirkrichtung übersetzt werden.

In einer weiteren bevorzugten Ausgestaltung des erfindungsgemäßen Brennstoffzellensystems enthält der Aktor eine Formgedächtnislegierung. Formgedächtnislegierungen (englisch shape memory alloy, Abkürzung SMA) sind spezielle Metalllegierungen, die im kalten Zustand verformt werden können, aber bei Erwärmung in ihre vorverformte ("erinnerte") Form zurückkehren. Dieser Effekt basiert auf dem Vorhandensein einer Austenit genannten Hochtemperaturphase und einer Martensit genannten Niedertemperaturphase bei derartigen Legierungen. Durch die aus der abgehenden Leitung aufgenommene Wärme und dem daraus resultierenden Übergang der Formgedächtnislegierung in ihre Hochtemperaturphase verändert der Aktor seine Form und wirkt derart auf das Verschlusselement ein, dass sich das Verschlusselement bewegt und die Auslassöffnung zumindest teilweise freigegeben wird.

Vorzugsweise ist die Formgedächtnislegierung eine Einweg-Effekt-Formgedächtnislegierung oder eine Zweiweg-Effekt-Formgedächtnislegierung. Der Einweg-Effekt ist durch eine einmalige Formänderung beim Erwärmen eines zuvor verformten Aktors gekennzeichnet. Das erneute Abkühlen bewirkt keine Formänderung, so dass der Aktor zum Schließen der Auslassöffnung z.B. mittels der durch den Betriebsdruck auf das Verschlusselement wirkenden Betriebsdruckkraft verformt werden muss, nachdem das Brennstoffzellensystem wieder gestartet wurde. Beim Zweiweg-Effekt führt ein erneutes Abkühlen zu einer entsprechenden Formänderung in die Form zurück, die vor dem Aufheizen vorhanden war. Der Vorteil der Verwendung einer Zweiweg-Effekt-Formgedächtnislegierung ist, dass der Aktor beim Abkühlen z.B. nach Außerbetriebnahme der Fluidleitungsvorrichtung von selbst in seine Ausgangsposition zurückkehrt und nicht ausschließlich durch weitere Elemente in diese gebracht werden muss. Ein gegebenenfalls für das Verschlusselement vorgesehene Rückstellelement kann daher kompakter ausgestaltet werden.

In einer weiteren bevorzugten Ausgestaltung des erfindungsgemäßen Brennstoffzellensystems ist der Aktor und/oder das Verschlusselement innerhalb einer von einem Leitungsvolumen der abgehenden Leitung abzweigenden Kavität angeordnet. Auf diese Weise wird der Strömungsquerschnitt des Leitungsvolumen durch die Komponenten des Ventils möglichst wenig beeinträchtigt. Zudem kann durch eine fluidische Kommunikation zwischen dem beispielsweise zylindrischen Leitungsvolumen und der Kavität ein effektiver Wärmeübertrag aus der Rezikulationsleitung auf den Aktor erfolgen.

In einer weiteren bevorzugten Ausgestaltung des erfindungsgemäßen Brennstoffzellensystems weist das Ventil ein Rückstellelement auf, das dazu ausgebildet ist, zumindest dann eine entgegen der Öffnungskraft des Aktors gerichtete Rückstellkraft auf das Verschlusselement aufzubringen, wenn das Verschlusselement nicht in der verschlossenen Position ist. Bevorzugt stellt das Rückstellelement eine Rückstellkraft bereit, die im Wesentlichen proportional zu einer Bewegung des Verschlusselements in Wirkrichtung des Aktors und/oder einer Stauchung des Rückstellelements in Wirkrichtung des Aktors ansteigt. Das Rückstellelement ist insbesondere ein Federelement, vorzugsweise eine Schraubenfeder. Insbesondere ist das Verschlusselement zwischen dem Aktor und dem Rückstellelement angeordnet.

In einer weiteren bevorzugten Ausgestaltung des erfindungsgemäßen Brennstoffzellensystems ist die Auslassöffnung und/oder das Verschlusselement geodätisch tieferliegender als die übrige abgehende Leitung angeordnet. Auf diese Weise können Wasseransammlungen in der abgehenden Leitung schwerkraftbedingt in Richtung des Ventils bewegt und so leichter abgelassen werden.

In einer weiteren bevorzugten Ausgestaltung des erfindungsgemäßen Brennstoffzellensystems ist die abgehende Leitung eine an den Anodenausgang angeschlossene Rezirkulationsleitung zum Zurückführen von Wasserstoff enthaltendem Anodenabgas in die Brennstoffzelle.

In einer weiteren bevorzugten Ausgestaltung des erfindungsgemäßen Brennstoffzellensystems ist die abgehende Leitung eine an den Kathodenausgang angeschlossene Drain-Leitung zum Abführen abgeschiedenen Wassers weg von der Brennstoffzelle.

In einer weiteren bevorzugten Ausgestaltung des erfindungsgemäßen Brennstoffzellensystems ist die abgehende Leitung eine Purge-Leitung des Brennstoffzellensystems.

Grundsätzlich eignet sich das Ventil auch für andere von der Brennstoffzelle abgehenden Leitungen, aus der Wasseransammlungen nach Beendigung des Betriebs zu entfernen sind.

Gemäß dem bereits vor- sowie dem weiter unten nachbeschriebenen wird die eingangs gestellte Aufgabe auch durch ein Brennstoffzellenfahrzeug mit den Merkmalen des Anspruchs 12 gelöst. Die mit dem erfindungsgemäßen Brennstoffzellensystem realisierten Vorteile lassen sich in besonders vorteilhafter Weise mit dem erfindungsgemäßen Brennstoffzellenfahrzeug kombinieren.

Das erfindungsgemäße Brennstoffzellenfahrzeug weist ein erfindungsgemäßes Brennstoffzellensystem auf.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: ein Ausführungsbeispiel eines erfindungsgemäßen Brennstoffzellensystems;
- Fig. 2A: ein Ventil gemäß einem Ausführungsbeispiel eines erfindungsgemäßen Brennstoffzellensystems bei Normalbetrieb in einer Schnittansicht;
- Fig. 2B: das Ventil aus Fig. 2A kurz nach Abschalten des Normalbetriebs;
- Fig. 2C: das Ventil aus Fig. 2B mit aktiviertem Aktor;
- Fig. 2D: das Ventil aus Fig. 2C nach Abkühlen der Rezirkulationsleitung.
- Fig. 3: ein Ventil gemäß einem weiteren Ausführungsbeispiel eines erfindungsgemäßen Brennstoffzellensystems in einer Schnittansicht.
- Fig. 4: ein Ventil gemäß einem weiteren Ausführungsbeispiel eines erfindungsgemäßen Brennstoffzellensystems in einer Schnittansicht nach Abkühlen der Rezirkulationsleitung.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

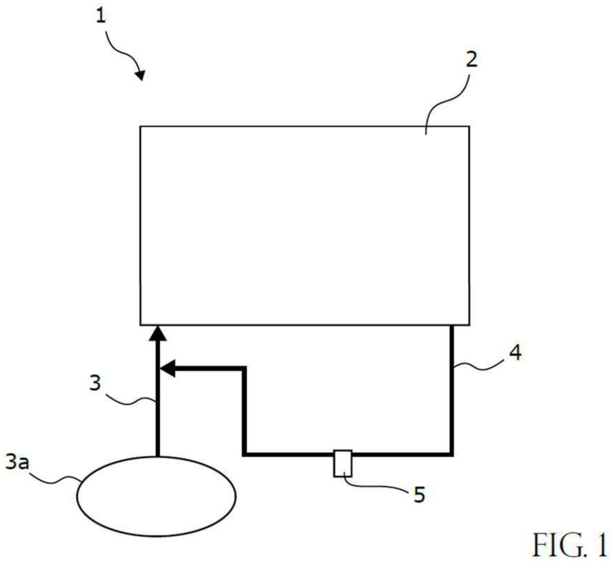

Fig. 1 zeigt ein Ausführungsbeispiel eines erfindungsgemäßen Brennstoffzellensystems 1. Das Brennstoffzellensystem 1 weist eine Brennstoffzelle 2 mit einem Anodeneingang und einem Anodenausgang auf. An den Anodeneingang ist eine Versorgungsleitung 3 zur Versorgung der Brennstoffzelle 2 mit Wasserstoff als Anodengas angeschlossen. Im vorliegenden Fall wird der Wasserstoff aus einem Wasserstofftank 3a bereitgestellt. Das Brennstoffzellensystem 1 weist eine von der Brennstoffzelle 2 abgehende Leitung 4 auf, die im vorliegenden Fall als einean den Anodenausgang angeschlossene Rezirkulationsleitung zum Zurückführen von Wasserstoff enthaltendem Anodenabgas G in die Brennstoffzelle 2 ausgebildet ist. Um Wasseransammlungen abzulassen, die sich insbesondere nach Beenden des Betriebs des Brennstoffzellensystems 1 in den Leitungen ansammeln, ist in der Rezirkulationsleitung 4 ist ein Ventil 5 angeordnet.

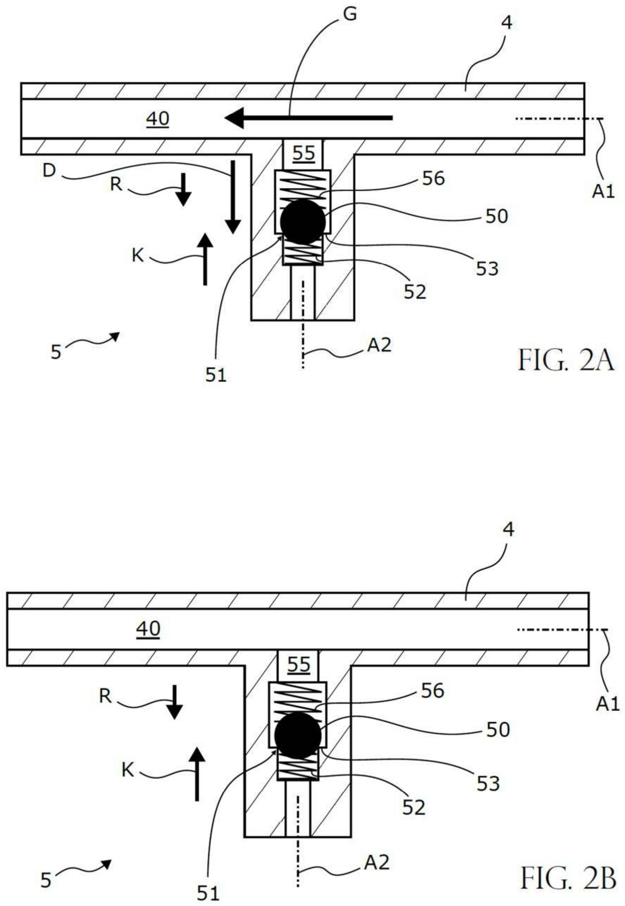

Die Figuren 2A bis 2D zeigen ein Ventil 5 gemäß einem Ausführungsbeispiel eines erfindungsgemäßen Brennstoffzellensystems 1 in einer Schnittansicht. Das Ventil 5 weist eine Auslassöffnung 51 auf, die durch ein Verschlusselement 50 verschlossen werden kann. Das Verschlusselement 50 ist vorliegend kugelförmig ausgeführt. In der verschlossenen Position des Ventils 5 liegt das Verschlusselement 50 in einem komplementär zur Form des Verschlusselements 50 ausgebildeten Ventilsitz 53 und verschließt dadurch die Auslassöffnung 51.

In Fig. 2A befindet sich das Brennstoffzellensystem 1 im Normalbetrieb, so dass Wasserstoff enthaltendes Anodenabgas G durch die Rezirkulationsleitung 4 in die Brennstoffzelle 2 zurückgeführt wird. Entsprechend liegt in der Rezirkulationsleitung 4 ein bestimmter Betriebsdruck sowie eine bestimmte Betriebstemperatur vor.

Das Ventil 5 ist derart ausgebildet ist, dass das Verschlusselement 50 durch den in der Rezirkulationsleitung 4 beim Betrieb des Brennstoffzellensystems 1 vorliegenden Betriebsdruck in eine verschlossene Position, d.h. vorliegend in den Ventilsitz 53, gedrückt wird. In anderen Worten wird durch den Betriebsdruck eine schließende Betriebsdruckkraft D auf das Verschlusselement 50 aufgebracht.

Das Ventil 5 weist einen temperaturabhängig bewegbaren Aktor 52 auf, der dazu ausgebildet ist, bei Vorliegen einer vorbestimmten Temperaturin der Rezirkulationsleitung 4, hier der Betriebstemperatur, eine Öffnungskraft K auf das Verschlusselement 50 aufzubringen. Beispielsweise weist der Aktor 52 eine Formgedächtnislegierung oder ein Bimetall auf, welches den Aktor 52 dazu bringt, sich bei steigender Temperatur entlang einer bestimmten Wirkrichtung auszudehnen. Im vorliegenden Fall weist der Aktor 52 die Form einer Schraubenfeder auf, die sich in einer zur Betriebsdruckkraft D entgegengesetzten Wirkrichtung ausdehnen und so die Öffnungskraft K auf das Verschlusselement 50 aufbringen kann. Diese Öffnungskraft K dabei derart ausgelegt, dass das Verschlusselement 50 zumindest bei Nichtvorliegen des Betriebsdrucks in der Rezirkulationsleitung 4 aus der verschlossenen Position in eine zumindest teilweise geöffnete Position gedrückt wird. Hingegen reicht die Öffnungskraft K nicht aus, um das Verschlusselement 50 gegen die Betriebsdruckkraft D in eine zumindest teilweise geöffnete Position zu bewegen.

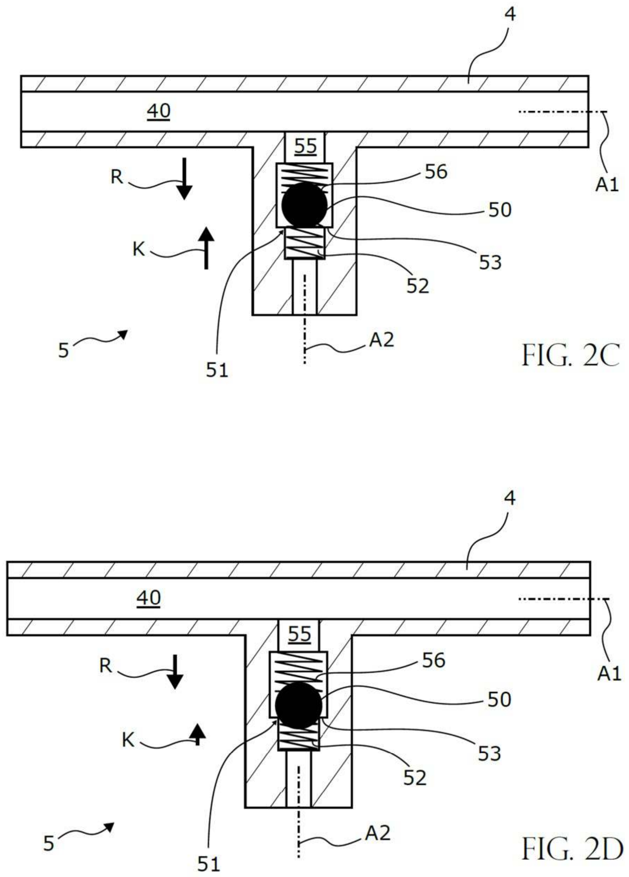

Fig. 2B zeigt das Ventil 5 kurz nach Beenden des Betriebs des Brennstoffzellensystems 1. Es wird kein Anodenabgas G durch die Rezirkulationsleitung 4 geleitet, so dass dort auch kein Betriebsdruck vorliegt und eine Betriebsdruckkraft auf das Verschlusselement 50 ausbleibt. Hingegen ist die Rezirkulationsleitung 4 noch eine gewisse Zeit auf Betriebstemperatur, so dass der Aktor 51 eine Öffnungskraft K auf das Verschlusselement 50 aufbringt, die groß genug ist, um das Verschlusselement 50 in eine zumindest teilweise geöffnete Position zu bewegen und das Ableiten von Wasseransammlungen aus der Rezirkulationsleitung 4 zu ermöglichen, wie dies in Fig. 2C gezeigt ist. In anderen Worten ist der Aktor 52 dazu ausgebildet, die Öffnungskraft K in Form einer Druckkraft auf das Verschlusselement 50 aufzubringen, wenn in der abgehenden Leitung 4 eine Temperatur vorliegt, die im Wesentlichen der Betriebstemperatur entspricht.

Fig. 2D zeigt das Ventil 5 eine gewisse Zeitdauer nach Beenden des Betriebs des Brennstoffzellensystems 1. Die Rezirkulationsleitung 4 hat sich abgekühlt und ist nicht mehr auf Betriebstemperatur. Der Aktor 52, der beispielsweise aus einer Zweiweg-Formgedächtnislegierung gefertigt ist, hat sich zusammengezogen und bringt nur noch eine kleine Öffnungskraft K auf das Verschlusselement 50 auf. Im vorliegenden Fall weist das Ventil 5 ein Rückstellelement 56 in Form einer Schraubenfeder auf, das dazu ausgebildet ist, zumindest dann eine entgegen der Öffnungskraft K des Aktors 52 gerichtete Rückstellkraft R auf das Verschlusselement 50 aufzubringen, wenn das Verschlusselement 50 nicht in der verschlossenen Position ist. Diese Rückstellkraft R ist derart ausgelegt, dass sie bei abgekühltem Brennstoffzellensystem 1 die Öffnungskraft K des Aktors 52 überwiegt, so dass das Ventil 5 verschlossen wird. Das Rückstellelement 56 trägt darüber hinaus zur Stabilisierung und Führung des Verschlusselements 50 bei.

Aktor 52 und Verschlusselement 50 sind innerhalb einer von einem Leitungsvolumen 40 der Rezirkulationsleitung 4 abzweigenden Kavität 55 angeordnet. Das Leitungsvolumen 40 erstreckt sich hierbei im Wesentlichen zylindrisch entlang einer ersten Achse A1, während sich die Kavität im Wesentlichen entlang einer zweiten Achse A2 erstreckt. Im vorliegenden Fall zweigt die Kavität 55 in einem Winkel von etwa 90 Grad von dem Leitungsvolumen ab. In anderen Ausführungsformen kann ein Winkel von weniger als 90 Grad vorteilhaft sein. Bevorzugt sind die Auslassöffnung 51 und das Verschlusselement 50 geodätisch tieferliegender als die übrige Rezirkulationsleitung 4 angeordnet.

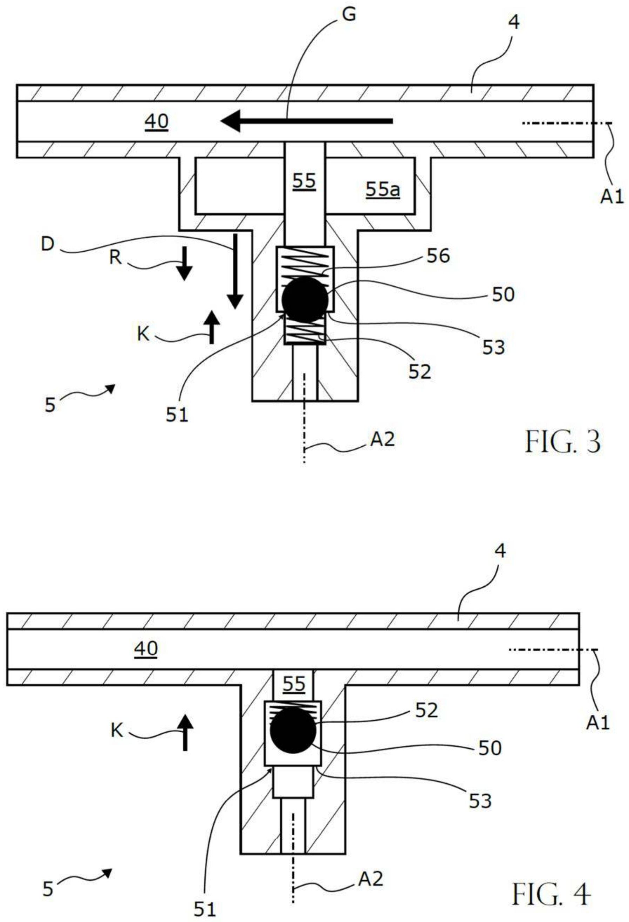

Fig. 3 zeigt ein Ventil 5 gemäß einem weiteren Ausführungsbeispiel eines erfindungsgemäßen Brennstoffzellensystems 1. Dieses Ventil 5 ist im Wesentlichen so aufgebaut wie das in den Figuren 2A-2D gezeigte Ventil 5, weist zusätzlich noch einen Auffangraum 55a zum Auffangen von Wasseransammlungen aus der Rezirkulationsleitung auf.

Fig. 4 zeigt ein Ventil 5 gemäß einem weiteren Ausführungsbeispiel eines erfindungsgemäßen Brennstoffzellensystems 1. Dieses Ventil 5 ist im Wesentlichen so aufgebaut, wie das in den Figuren 2A-2D gezeigte Ventil 5, wobei der Aktor 52 allerdings ausgebildet ist, die Öffnungskraft K in Form einer Zugkraft auf das Verschlusselement 50 aufzubringen, wenn die abgehende Leitung 4 sich eine gewisse Zeit nach Beenden des Betriebs abgekühlt hat, d.h. wenn in der abgehenden Leitung 4 eine Temperatur vorliegt, die deutlich unter der Betriebstemperatur liegt.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Brennstoffzellensystem (1) aufweisend
eine Brennstoffzelle (2) mit einem Anodeneingang und einem Anodenausgang,
eine an den Anodeneingang angeschlossene Versorgungsleitung (3) zur Versorgung der Brennstoffzelle (2) mit Wasserstoff als Anodengas,
eine von der Brennstoffzelle abgehende Leitung (4), und
ein in der abgehenden Leitung (4) angeordnetes Ventil (5) mit einer durch ein Verschlusselement (50) verschließbaren Auslassöffnung (51),
wobei das Ventil (5) derart ausgebildet ist, dass das Verschlusselement (50) zumindest anteilsweise durch einen in der abgehenden Leitung (4) beim Betrieb des Brennstoffzellensystems (1) vorliegenden Betriebsdruck in eine verschlossene Position gedrückt wird,
wobei das Ventil (5) einen temperaturabhängig bewegbaren Aktor (52) aufweist, der dazu ausgebildet ist, bei Vorliegen einer vorbestimmten Temperatur in der abgehenden Leitung (4) eine Öffnungskraft (K) auf das Verschlusselement (50) aufzubringen, die derart ausgelegt ist, dass das Verschlusselement (50) zumindest bei Nichtvorliegen des Betriebsdrucks in der abgehenden Leitung (4) aus der verschlossenen Position in eine zumindest teilweise geöffnete Position gedrückt wird.

2. Brennstoffzellensystem (1) nach Anspruch 1, wobei der Aktor (52) ein Bimetall enthält.

3. Brennstoffzellensystem (1) nach Anspruch 1 oder 2, wobei der Aktor (52) eine Formgedächtnislegierung enthält.

4. Brennstoffzellensystem (1) nach einem der vorangehenden Ansprüche, wobei der Aktor (52) und/oder das Verschlusselement (50) innerhalb einer von einem Leitungsvolumen (40) der abgehenden Leitung (4) abzweigenden Kavität (55) angeordnet ist.

5. Brennstoffzellensystem (1) nach einem der vorangehenden Ansprüche, wobei der temperaturabhängig bewegbare Aktor (52) dazu ausgebildet ist, die Öffnungskraft (K) auf das Verschlusselement (50) aufzubringen, wenn in der abgehenden Leitung (4) eine Temperatur vorliegt, die im Wesentlichen der Betriebstemperatur entspricht, insbesondere wobei die Öffnungskraft (K) eine Druckkraft ist.

6. Brennstoffzellensystem (1) nach einem der vorangehenden Ansprüche, wobei der temperaturabhängig bewegbare Aktor (52) dazu ausgebildet ist, die Öffnungskraft (K) auf das Verschlusselement (50) aufzubringen, wenn in der abgehenden Leitung (4) eine Temperatur vorliegt, die deutlich unter der Betriebstemperatur liegt, insbesondere wobei die Öffnungskraft (K) eine Zugkraft ist.

7. Brennstoffzellensystem (1) nach einem der vorangehenden Ansprüche, wobei das Ventil (5) ein Rückstellelement (56) aufweist, das dazu ausgebildet ist, zumindest dann eine entgegen der Öffnungskraft (K) des Aktors (52) gerichtete Rückstellkraft (R) auf das Verschlusselement (50) aufzubringen, wenn das Verschlusselement (50) nicht in der verschlossenen Position ist.

8. Brennstoffzellensystem (1) nach einem der vorangehenden Ansprüche, wobei die Auslassöffnung (51) und/oder das Verschlusselement (50) geodätisch tieferliegender als die übrige abgehende Leitung (4) angeordnet ist.

9. Brennstoffzellensystem (1) nach einem der vorangehenden Ansprüche, wobei die abgehende Leitung (4) eine an den Anodenausgang angeschlossene Rezirkulationsleitung zum Zurückführen von Wasserstoff enthaltendem Anodenabgas (G) in die Brennstoffzelle (2) ist.

10. Brennstoffzellensystem (1) nach einem der vorangehenden Ansprüche, wobei die abgehende Leitung (4) eine an den Kathodenausgang angeschlossene Drain-Leitung zum Abführen abgeschiedenen Wassers weg von der Brennstoffzelle (2) ist.

11. Brennstoffzellensystem (1) nach einem der vorangehenden Ansprüche, wobei die abgehende Leitung (4) eine Purge-Leitung des Brennstoffzellensystems (1) ist.

12. Brennstoffzellenfahrzeug mit einem Brennstoffzellensystem (1) nach einem der vorherangehenden Ansprüche.
